## Europäisches Patentamt
## European Patent Office
## Office européen des brevets

(19)

(11) Veröffentlichungsnummer: **0 010 264**
**B1**

(12) **EUROPÄISCHE PATENTSCHRIFT**

(45) Veröffentlichungstag der Patentschrift:
**12.01.83**

(51) Int. Cl.³: **H 04 L 11/00, H 04 L 11/20**

(21) Anmeldenummer: **79103914.2**

(22) Anmeldetag: **11.10.79**

(54) **Fernschreib-Nebenstellenanlage.**

(30) Priorität: **23.10.78 DE 2846130**

(43) Veröffentlichungstag der Anmeldung:
**30.04.80 Patentblatt 80/9**

(45) Bekanntmachung des Hinweises auf die Patenterteilung:
**12.01.83 Patentblatt 83/2**

(84) Benannte Vertragsstaaten:
**AT BE CH FR GB IT LU NL SE**

(56) Entgegenhaltungen:
**GB-A-1 417 978**

**TELCOM REPORT, Vol. 1, Heft 5, Oktober 1978, München, DE, ROSCHEISEN et al.: «EMX1010- ein neues System kleiner Nebenstellenanlagen für die Textkommunikation», Seiten 321–324**
**ELECTRONIC ENGINEERING, Vol. 49, Nr. 595, August 1977, London, GB, YOUNG: «Modern message switching systems», Seiten 63, 64**
**1978 INTERNATIONAL CONFERENCE ON COMMUNICATIONS, Vol. 1, 4–7 Juni 1978, Toronto, Canada, New York, US, ROSS: «System engineering of integrated voice and data switches», Seiten 10.5.1–20.6.4**
**TELCOM REPORT, Vol. 1, Heft 4, August 1979, München, DE, BRENCE: «EMX1010- eine benutzungs- und wartungsfreundliche Nebenstellenanlage», Seiten 235–238**

(73) Patentinhaber: **SIEMENS AKTIENGESELLSCHAFT**
**Berlin und München, Postfach 22 02 61,**
**D-8000 München 22 (DE)**

(72) Erfinder: **Kleinert, Helmuth, Stockmannstrasse 44,**
**D-8000 München 71 (DE)**

**TELCOM REPORT, Vol. 1, Heft 4, August 1978, München, DE, LAMMERS et al.: «Die Fernschreibnebenstellenanlage System 102 von Siemens bei der Daimler-Benz AG, Stuttgart-Untertürkheim», Seiten 250–253**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Fernschreib-Nebenstellenanlage

Die Erfindung bezieht sich auf eine Fernschreib-Nebenstellenanlage mit zu einer Kommunikationseinheit gehörenden Fernschreibteilnehmerstellen, mit einer Zentraleinheit, die den Verbindungsverkehr zwischen den einzelnen Fernschreibteilnehmerstellen untereinander und gegebenenfalls mit einer oder mehreren Fernschreib- oder Datenleitungen eines gesonderten Fernschreib- oder Datennetzes steuert, mit einer Speichereinheit, in der von einer Fernschreibteilnehmerstelle abgegebene oder dieser zuzuführende Signale zwischenspeicherbar sind, und mit einer gemeinsamen Busleitung, an der die Kommunikationseinheit, die Zentraleinheit und die Speichereinheit angeschlossen sind, wobei die Zentraleinheit die Signalübertragung mit bzw. zwischen der Kommunikationseinheit und der Speichereinheit steuert.

Es ist bereits eine Fernschreib-Nebenstellenanlage bekannt (Electronic Engineering, Vol. 49, Nr. 595, Aug. 1977, Seiten 63, 64), bei der Fernschreibleitungen über Datensteuereinheiten und eine Schnittstellenschaltung an einer Busleitung angeschlossen sind, an der Endgeräte über eine gesonderte Schnittstellenschaltung angeschlossen sind. Ausserdem sind mit der betreffenden Busleitung ein Minicomputer und bei Bedarf ein Plattenspeicher angeschlossen. In diesem Zusammenhang ist es zwar auch bekannt, einen einzelnen Mikroprozessor in der eigentlichen Zentraleinheit vorzusehen und die Schnittstellenschaltungen mit billigeren und weniger leistungsvollen Mikroprozessoren auszustatten.

Der der eigentlichen Zentraleinheit zugehörige Mikroprozessor steuert dann den Verbindungsverkehr zu bzw. mit den anderen Mikroprozessoren. Ein zu der Zentraleinheit gehörender RAM-Speicher wird zur Kurzzeitspeicherung von Nachrichten ausgenutzt. Dies bedeutet, dass die Zentraleinheit insgesamt relativ stark belastet ist; sie muss nämlich auf jeden Fall die Adressen der Speicherbereiche bereithalten, in denen Nachrichtensignale abgespeichert sind.

Der Erfindung liegt nun die Aufgabe zugrunde, einen Weg zu zeigen, wie die Zentraleinheit bei der Speicherung von Nachrichtensignalen in der Speichereinheit noch weiter entlastet werden kann als bisher.

Gelöst wird die vorstehend aufgezeigte Aufgabe bei einer Fernschreib-Nebenstellenanlage der eingangs genannten Art erfindungsgemäss dadurch, dass die Kommunikationseinheit, die Zentraleinheit und die Speichereinheit jeweils mit einer gesonderten Verarbeitungseinheit an der gemeinsamen Busleitung derart angeschlossen sind, dass lediglich die Verarbeitungseinheiten der Kommunikationseinheit und der Speichereinheit durch die Verarbeitungseinheit der Zentraleinheit gesteuert jeweils nur für eine Signalübertragung verbunden werden, und dass die Verarbeitungseinheit der Zentraleinheit die Adressen derjenigen Speicherbereiche der Speichereinheit bereitstellt, in denen zusammengehörige Signale abzuspeichern sind, und die Adressen der Speicherbereiche der Speichereinheit, in denen zusammengehörige Signale gespeichert sind, für eine gesicherte Abspeicherung an die Speichereinheit abzugeben vermag, aus der die betreffenden Adressen von der Verarbeitungseinheit der Zentraleinheit für ein anschliessendes Auslesen der genannten Signale aus der Speichereinheit wieder abgeholt werden.

Die Erfindung bringt den Vorteil mit sich, dass die Zentraleinheit ZE hinsichtlich der Speicherung von Adressen entlastet ist, welche in der Speichereinheit abgespeicherte Nachrichtensignale bzw. deren Speicherplätze bezeichnen. Dadurch kann unter geringer Belastung der gesamten Fernschreib-Nebenstellenanlage eine sichere Weiterleitung der in der Speichereinheit abgespeicherten Signale auch nach längerer Betriebszeit der Anlage gewährleistet werden, während der die Zentraleinheit in die Abwicklung von anderen Steuerungsaufgaben einbezogen ist. Die erwähnte Abspeicherung der Adressen in der Speichereinheit wird insbesondere dann vorgenommen, wenn die in den entsprechend bezeichneten Speicherbereichen der Speichereinheit abgespeicherten Signale nicht sofort weiterzuleiten sind, sondern erst zu einem Zeitpunkt, zu dem ihre Weiterleitung beispielsweise aus gebührentechnischen Gründen günstig oder überhaupt erst möglich ist.

Zweckmässigerweise werden durch die Verarbeitungseinheit der Kommunikationseinheit die an dieser angeschlossenen Fernschreibteilnehmerstellen und Fernschreib- bzw. Datenleitungen auf das Auftreten von Anrufsignalen zyklisch überwacht, wobei auf die Ermittlung eines derartigen Anrufsignals hin ein Anforderungssignal an die Zentraleinheit abgegeben wird. Hierdurch entlastet die Kommunikationseinheit die Zentraleinheit in erheblichem Umfang, indem die Zentraleinheit erst nach Ermittlung von Anrufsignalen in die Abwicklung der dann erforderlichen Prozeduren einbezogen wird. Überdies ist hierdurch die Möglichkeit eröffnet, in der Kommunikationseinheit bzw. in deren Verarbeitungseinheit eine Signalisierungsvorverarbeitung mit einer gegebenenfalls erfolgenden Umsetzung von Formaten und Zwischenspeicherung von Signalen vorzunehmen. Dies bedeutet, dass es auf relativ einfache Weise möglich ist, in der Verarbeitungseinheit bzw. Verarbeitungseinrichtung der Kommunikationseinheit die von den Fernschreibteilnehmerstellen abgegebenen bzw. über Fernschreib- oder Datenleitungen zugeführten Signale in einer vorgegebenen Anzahl zu sammeln, um sie dann erst weiter zu übertragen. Dadurch ergibt sich in vorteilhafter Weise eine weitere Senkung der Belastung der genannten Busleitung.

Ein schaltungstechnisch besonders einfacher Aufbau ergibt sich dann, wenn sämtliche Verarbeitungseinheiten in gleicher Weise ausgebildet sind. Zweckmässigerweise kann man die betreffenden Verarbeitungseinheiten jeweils durch einen Mikroprozessor bilden.

Hinsichtlich der Erweiterbarkeit der Fernschreib-Nebenstellenanlage ist es günstig, wenn der Zentraleinheit eine Steuereinrichtung zugehörig ist, welche in Abhängigkeit von der jeweils gerade zu bedienenden Einheit bzw. Einrichtung der Kommunikationseinheit und der Speichereinheit und in Abhängigkeit von den jeweils auszuführenden Befehlen gesonderte Programmspeicher der Zentraleinheit freigibt. Durch diese Erweiterbarkeit des Programmspeicherteiles der Zentraleinheit ist es dann auf relativ einfache Weise möglich, auch die Anzahl der Fernschreibteilnehmerstellen und Fernschreibleitungen zu erhöhen, die an der Kommunikationseinheit angeschlossen sind, ohne dass es bei der Abwicklung der einzelnen erforderlichen Prozeduren zu Schwierigkeiten kommt.

Anhand einer Zeichnung wird die Erfindung nachstehend an einem Ausführungsbeispiel näher erläutert.

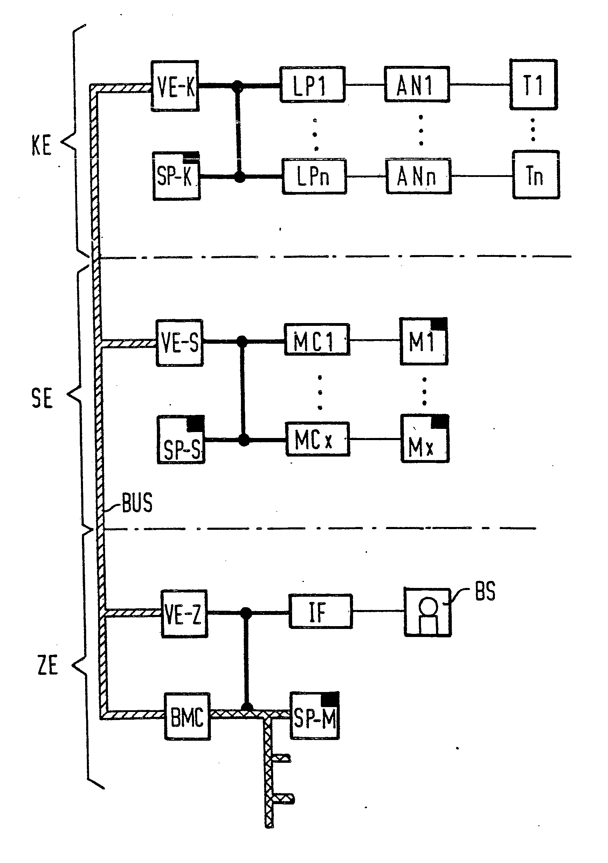

Die in der Zeichnung dargestellte Fernschreib-Nebenstellenanlage weist drei Einheiten auf, nämlich eine Kommunikationseinheit, eine Speichereinheit SE und eine Zentraleinheit ZE. Diese drei Einheiten sind über eine eine Mehrzahl von Leitungen umfassende Busleitung BUS miteinander verbunden. Die betreffenden Einheiten arbeiten im Grunde genommen jeweils als autarke Einheit und asynchron in bezug auf die jeweils übrigen Einheiten. Wie weiter unten noch ersichtlich werden wird, ist die Zentraleinheit ZE jedoch zu bestimmten Zeitpunkten mit den anderen beiden Einheiten verbunden, um von diesen Steuerinformationen aufzunehmen oder an diese Steuerinformationen abzugeben und um eine Signalübertragung zwischen diesen anderen beiden Einheiten auszulösen.

Die Kommunikationseinheit KE ist mit einer gesonderten Verarbeitungseinheit VE-K an der Busleitung BUS angeschlossen. Dieser Verarbeitungseinheit VE-K ist ein Speicher SP-K zugehörig, in welchem die für den Betrieb der Kommunikationseinheit KE notwendigen Programmdaten eingespeichert oder einspeicherbar sind. Über Leitungspuffer LP1 bis LPn ist die Verarbeitungseinheit VE-K der Kommunikationseinheit KE an Anschlussschaltungen AN1 bis ANn angeschlossen, an denen Fernschreibteilnehmerstellen oder Fernschreibleitungen oder Datenleitungen T1 bis Tn angeschlossen sind. Der Anschluss der Fernschreibteilnehmerstellen, Fernschreibleitungen und Datenleitungen an die Anschlussschaltungen AN1 bis ANn kann völlig beliebig vorgenommen werden; überdies sind die Fernschreibteilnehmerstellen, die Fernschreibleitungen und die Datenleitungen als einander gleichberechtigte Einrichtungen in der Kommunikationseinheit KE zu betrachten.

Die Speichereinheit SE weist eine Verarbeitungseinrichtung bzw. -einheit VE-S auf, mit der sie an der Busleitung BUS angeschlossen ist. Dieser Verarbeitungseinrichtung VE-S ist ebenfalls ein Speicher SP-S zugehörig, in welchem die in der Speichereinheit SE für die Abwicklung von Speichervorgängen erforderlichen Programmdaten eingespeichert bzw. einspeicherbar sind. An der Verarbeitungseinrichtung VE-S der Speichereinheit SE sind Lese-Schreib-Speicher M1 bis Mx über ihnen zugehörige Speichersteuerschaltungen MC1 bis MCx angeschlossen.

Die Zentraleinheit ZE weist eine Verarbeitungseinrichtung bzw. -einheit VE-Z auf, mit der sie an der Busleitung BUS angeschlossen ist. Der Verarbeitungseinrichtung VE-Z der Zentraleinheit ZE ist eine Steuereinrichtung BMC zugehörig, die ebenfalls an der Busleitung BUS angeschlossen ist und die in Abhängigkeit von der jeweils gerade zu bedienenden Einrichtung der Kommunikationseinheit KE und der Speichereinheit SE sowie in Abhängigkeit von den jeweils auszuführenden Befehlen gesonderte Programmspeicher der Zentraleinheit ZE für die Verarbeitungseinrichtung VE-Z freigibt. Von diesen Programmspeichern ist in der Zeichnung lediglich ein Programmspeicher SP-M dargestellt. Mit der Verarbeitungseinrichtung VE-Z der Zentraleinheit ZE ist im vorliegenden Fall noch eine Blattschreibereinrichtung BS über eine Schnittstellenschaltung IF verbunden. Diese Blattschreibereinrichtung BS mag für die Protokollierung von Zustands- bzw. Prüfsignalen dienen.

Nachdem zuvor der Aufbau der in der Zeichnung dargestellten Fernschreib-Nebenstellenanlage erläutert worden ist, sei nunmehr auf die Arbeitsweise dieser Anlage eingegangen. Wie oben bereits erwähnt, arbeiten die drei Einheiten der dargestellten Fernschreib-Nebenstellenanlage asynchron. Durch die Verarbeitungseinheit VE-K der Kommunikationseinheit KE werden die einzelnen Anschlussschaltungen AN1 bis ANn bzw. die Leitungspuffer LP1 bis LPn auf das Auftreten von Anrufsignalen überwacht, was zweckmässigerweise durch eine zyklische Abfrage dieser Einrichtungen erfolgt. Nach Ermittlung eines derartigen Anrufsignals und gegebenenfalls nach Aufnahme von nachfolgenden Signalen in einer vorgebbaren Anzahl gibt die Verarbeitungseinheit VE-K der Kommunikationseinheit KE an die Zentraleinheit ZE ein entsprechendes Anreizsignal ab, auf dessen Auftreten hin die Verarbeitungseinheit VE-Z der Zentraleinheit ZE die für die Weiterleitung der aufgenommenen Signale abzuwickelnde Prozedur in der Kommunikationseinheit KE aufruft. Diese Prozedur läuft darauf hinaus, dass die betreffenden Signale praktisch unmittelbar an die gewünschte Fernschreibteilnehmerstelle oder Fernschreibleitung bzw. Datenleitung weitergeleitet werden. Ist diese gewünschte Fernschreibteilnehmerstelle oder Fernschreibleitung bzw. Datenleitung jedoch besetzt oder noch nicht anzusteuern, so kann die erwähnte Prozedur darauf hinauslaufen, dass die zuvor aufgenommenen und gesammelten Signale der Speichereinheit SE zuzuführen sind. In diesem Fall gibt die Verarbeitungseinrichtung VE-Z der Zentraleinheit ZE an die Speichereinheit SE einen Befehl, die betreffenden Signale von der Kommunikationseinheit KE über die Busleitung BUS zu übernehmen. Ausserdem wird der Speichereinheit SE bzw. deren Verarbeitungseinrichtung VE-S von der Zentraleinheit ZE angegeben, in welchem Speicherbereich bzw. in welchen Speicherbereichen der Speicher M1 bis Mx dieser Speichereinheit SE die betreffenden Signale abzuspeichern sind. Nach Abgabe dieser Befehle an die Speichereinheit SE läuft dann der Signalübertragungsvorgang von der Kommunikationseinheit KE in die Speichereinheit SE ohne Einwirkung durch die Zentraleinheit ZE ab. Die Zentraleinheit ZE ist damit während dieser Zeitspanne für die Ausführung anderer Vorgänge verfügbar.

Die Zentraleinheit ZE löst nun nicht nur die Übertragung von Signalen zwischen der Kommunikationseinheit KE und der Speichereinheit SE aus, sondern sie steuert auch den jeweils erforderlichen Verbindungsaufbau und -abbau in der Kommunikationseinheit KE. Für die Steuerung des Verbindungsaufbaus kann die Zentraleinheit ZE ein von der Kommunikationseinheit KE aufgenommenes und als solches erkanntes Anrufsignal heranziehen. Für die Steuerung eines Verbindungsabbaus kann die Zentraleinheit ZE ein Schlusszeichen heranziehen, das am Ende einer von einer Fernschreibteilnehmerstelle abgegebenen Nachricht in der Kommunikationseinheit KE eingetroffen und entsprechend bewertet worden ist.

Wie oben bereits erläutert, werden über die Verarbeitungseinheit VE-Z der Zentraleinheit ZE die Adressen derjenigen Speicherbereiche der Speichereinheit SE bereitgestellt, in denen zusammengehörige Signale bzw. Signalblöcke abzuspeichern oder abgespeichert sind. Diese Adressen brauchen nun nicht in einem der Zentraleinheit ZE zugehörigen Speicher ständig gespeichert zu bleiben. Vielmehr können diese Adressen auch der Speichereinheit SE zugeführt werden, um dort in einem Speicher gesichert abgespeichert zu werden. Von einer solchen Massnahme wird insbesondere dann Gebrauch gemacht, wenn die zugehörigen Signale bzw. Nachrichtensignale in der Speichereinheit SE weiterhin gespeichert bleiben sollen, um zu einem späteren Zeitpunkt zu der gewünschten Fernschreibteilnehmerstelle hin übertragen zu werden. Dadurch wird die Zentraleinheit ZE dann hinsichtlich der Speicherung von entsprechenden Adressen entlastet. Die Zentraleinheit ZE kann gegebenenfalls diese Adressen zu dem erwähnten späteren Zeitpunkt wieder aus der Speichereinheit SE abholen, um dann dieser Speichereinheit SE sukzessiv diese Adressen mit entsprechenden Befehlen für eine Übertragung der unter den entsprechenden Adressen abgespeicherten Signale zu der Kommunikationseinheit KE zuzuführen.

Aus vorstehendem dürfte ersichtlich sein, dass die in der Zeichnung dargestellte Fernschreib-Nebenstellenanlage jeweils in einer von zwei unterschiedlichen Betriebsweisen betrieben werden kann. Gemäss der einen Betriebsweise werden Signale, die von an der Kommunikationseinheit KE angeschlossenen Fernschreibteilnehmerstellen abgegeben werden oder die über dort angeschlossene Fernschreibleitungen oder Datenleitungen übertragen werden, unmittelbar an die jeweils in Frage kommende weitere Fernschreibteilnehmerstelle oder Fernschreibleitung bzw. Datenleitung abgegeben. Bei der anderen Betriebsweise werden die der Kommunikationseinheit KE zugeführten Signale in der Speichereinheit SE zwischengespeichert, um danach wieder an die Kommunikationseinheit KE für eine Weiterleitung zu der gewünschten Fernschreibteilnehmerstelle oder Fernschreibleitung bzw. Datenleitung abgegeben zu werden. Die für die Abwicklung von Verarbeitungs- und Steuerungsvorgängen in den Verarbeitungseinrichtungen bzw. -einheiten der Kommunikationseinheit und der Speichereinheit erforderlichen Programmbefehle können durch Abwicklung eines Urladeprogramms von der Zentraleinheit bereitgestellt werden.

## Patentansprüche

1. Fernschreib-Nebenstellenanlage mit zu einer Kommunikationseinheit (KE) gehörenden Fernschreibteilnehmerstellen, mit einer Zentraleinheit (ZE), die den Verbindungsverkehr zwischen den einzelnen Fernschreibteilnehmerstellen untereinander und gegebenenfalls mit einer oder mehreren Fernschreib- oder Datenleitungen (T1 bis Tn) eines gesonderten Fernschreib- oder Datennetzes steuert, mit einer Speichereinheit (SE), in der von einer Fernschreibteilnehmerstelle abgegebene oder dieser zuzuführende Signale zwischenspeicherbar sind, und mit einer gemeinsamen Busleitung (BUS), an der die Kommunikationseinheit (KE), die Zentraleinheit (ZE) und die Speichereinheit (SE) angeschlossen sind, wobei die Zentraleinheit (ZE) die Signalübertragung mit bzw. zwischen der Kommunikationseinheit (KE) und der Speichereinheit (SE) steuert, dadurch gekennzeichnet, dass die Kommunikationseinheit (KE), die Zentraleinheit (ZE) und die Speichereinheit (SE) jeweils mit einer gesonderten Verarbeitungseinheit (VE-K, VE-S, VE-Z) an der gemeinsamen Busleitung (BUS) derart angeschlossen sind, dass lediglich die Verarbeitungseinheiten (VE-K, VE-S) der Kommunikationseinheit (KE) und der Speichereinheit (SE) durch die Verarbeitungseinheit (VE-Z) der Zentraleinheit (ZE) gesteuert jeweils nur für eine Signalübertragung verbunden werden, und dass die Verarbeitungseinheit (VE-Z) der Zentraleinheit (ZE) die Adressen derjenigen Speicherbereiche der Speichereinheit (SE) bereitstellt, in denen zusammengehörige Signale abzuspeichern sind, und die Adressen der Speicherbereiche der Speichereinheit (SE), in denen zusammengehörige Signale gespeichert sind, für eine gesicherte Abspeicherung an die Speichereinheit (SE) abzugeben vermag, aus der die betreffenden Adressen von der Verarbeitungseinheit (VE-Z) der Zentraleinheit (ZE) für ein anschliessendes Auslesen der genannten Signale aus der Speichereinheit (SE) wieder abgeholt werden.

2. Fernschreib-Nebenstellenanlage nach Anspruch 1, dadurch gekennzeichnet, dass durch die Verarbeitungseinheit (VE-K) der Kommunikationseinheit (KE) die an dieser angeschlossenen Fernschreibteilnehmerstellen (T1 bis Tn) und Fernschreib- bzw. Datenleitungen auf das Auftreten von Anrufsignalen zyklisch überwacht werden und dass bei Ermittlung eines derartigen Anrufsignals ein Anforderungssignal an die Zentraleinheit (ZE) abgegeben wird.

3. Fernschreib-Nebenstellenanlage nach Anspruch 1 oder 2, dadurch gekennzeichnet, dass sämtliche Verarbeitungseinheiten (VE-K, VE-S, VE-Z) in gleicher Weise ausgebildet sind.

4. Fernschreib-Nebenstellenanlage nach einem der Ansprüche 1 bis 3, dadurch gekennzeichnet, dass der Zentraleinheit (ZE) eine Steuereinrichtung (BMC) zugehörig ist, welche in Abhängigkeit von der jeweils gerade zu bedienenden Einrichtung der Kommunikationseinheit (KE) und der Speichereinheit (SE) und in Abhängigkeit von den jeweils auszuführenden Befehlen gesonderte Programmspeicher (SP-M) der Zentraleinheit (ZE) freigibt.

## Claims

1. Telex private branch exchange comprising telex subscriber stations assigned to a communications unit (KE), and comprising a central unit (ZE) which controls the connection traffic between the individual telex subscriber stations among themselves and possibly with one or more teleprinter or data lines (T1 to Tn) of a separate telex or data network, and comprising a storage unit (SE) in which signals which have been transmitted by a telex subscriber station or which are to be fed to the latter can be temporarily stored, and comprising a common bus line (BUS), to which the communications unit (KE), the central unit (ZE) and the storage unit (SE) are connected, the central unit (ZE) controlling the signal transmission with and between the communications unit (KE) and the storage unit (SE), characterised in that the communications unit (KE), the central unit (ZE) and the storage unit (SE) are respectively connected to the common bus line (BUS) by means of a separate processing unit (VE-K, VE-S, VE-Z) in such a manner that only the processing units (VE-K, VE-S) of the communications unit (KE) and of the storage unit (SE), which are controlled by the processing unit (VE-Z) of the central unit (ZE), are each connected for one signal transmission, and that the processing unit (VE-Z) of the central unit (ZE) makes available the addresses of those storage regions of the storage unit (SE) in which correlated signals are to be stored, and is able to transmit the addresses of the storage regions of the storage unit (SE) in which correlated signals are stored, to the storage unit (SE) for a protected storage, from which the respective addresses are re-collected by the processing unit (VE-Z) of the central unit (ZE) for a subsequent read-out of said signals from the storage unit (SE).

2. Telex private branch exchange as claimed in claim 1, characterised in that by means of the processing unit (VE-K) of the communications unit (KE), the telex subscriber stations (T1 to Tn) and the telex lines and data lines, which are connected to the former, are cyclically monitored in respect of the occurrence of call signals, and that when such a call signal is detected a request signal is transmitted to the central unit (ZE).

3. Telex private branch exchange as claimed in claim 1 or 2, charaterised in that all processing units (VE-K, VE-S, VE-Z) are designed in the same manner.

4. Telex private branch exchange as claimed in one of claims 1 to 3, characterised in that the central unit (ZE) is assigned a control device (BMC) which, in dependence upon the device of the communications unit (KE) and of the storage unit (SE), which is currently to be operated in each case, and in dependence upon the commands, which are respectively to be carried out, releases programme stores (SP-M) of the central unit (ZE).

## Revendications

1. Central privé de télex comportant des postes d'abonnés du service télex appartenant à une unité de communications (KE), une unité centrale (ZE) qui commande le trafic des communications entre les postes individuels d'abonnés du service télex entre eux et éventuellement avec une ou plusieurs lignes de télex ou de données (T1 à Tn) d'un réseau télex ou de données distinct, une unité de mémoire (SE) dans laquelle peuvent être mémorisés temporairement des signaux délivrés par un poste d'abonné du service télex ou devant être appliqués à celui-ci, et une ligne omnibus (BUS) à laquelle sont raccordées l'unité de communications (KE), l'unité centrale (ZE) et l'unité de mémoire (SE), l'unité centrale (ZE) commandant la transmission des signaux avec ou entre l'unité de communications (KE) et l'unité de mémoire (SE), caractérisé par le fait que l'unité de communications (KE), l'unité centrale (ZE) et l'unité de mémoire (SE) sont respectivement raccordées à la ligne omnibus commune (BUS) par une unité de traitement distincte (VE-K, VE-S, VE-Z), de manière que seules les unités de traitement (VE-K, VE-S) de l'unité de communications (KE) et de l'unité de mémoire (SE) soient reliées, respectivement sous la commande de l'unité de traitement (VE-Z) de l'unité centrale (ZE), uniquement pour une transmission de signaux, que l'unité de traitement (VE-Z) de l'unité centrale (ZE) prépare les adresses des zones de mémoire de l'unité de mémoire (SE) dans lesquelles doivent être mémorisés des signaux connexes, et peut délivrer, pour une mémorisation protégée, les adresses des zones de mémoire de l'unité de mémoire (SE), dans lesquelles sont mémorisés des signaux connexes, à l'unité de mémoire (SE) à partir de laquelle les adresses concernées sont rappelées par l'unité de traitement (VE-Z) de l'unité centrale (ZE) pour une lecture ultérieure desdits signaux à partir de l'unité de mémoire (SE).

2. Central privé de télex suivant la revendication 1, caractérisé par le fait que l'unité de traitement (VE-K) de l'unité de communications (KE) surveille cycliquement les postes d'abonnés (T1 à Tn) du service télex et les lignes télex ou de données qui y sont raccordés, en ce qui concerne l'apparition de signaux d'appel, et que lors de la détermination d'un tel signal d'appel un signal de demande est délivré à l'unité centrale (ZE).

3. Central privé de télex suivant l'une des revendications 1 ou 2, caractérisé par le fait que toutes les unités de traitement (VE-K, VE-S, VE-Z) sont constituées de la même façon.

4. Central privé de télex suivant l'une des revendications 1 à 3, caractérisé par le fait qu'à l'unité centrale (ZE) est associé un dispositif de commande (BMC) qui libère des mémoires de programme distinctes (SP-M) de l'unité centrale (ZE) en fonction du dispositif de l'unité de communications (KE) et de l'unité de mémoire (SE) devant juste être respectivement desservi et en fonction des ordres devant être respectivement exécutés.